**Europäisches Patentamt**

**European Patent Office**

**Office européen des brevets**

(11) Veröffentlichungsnummer: **0 028 708**
**B1**

(12) **EUROPÄISCHE PATENTSCHRIFT**

(45) Veröffentlichungstag der Patentschrift:
**23.03.83**

(21) Anmeldenummer: **80106104.5**

(22) Anmeldetag: **08.10.80**

(51) Int. Cl.³: **G 11 B 5/41, G 11 B 23/04**

(54) Reinigungskassette für Kassettenrecorder.

(30) Priorität: **10.11.79 DE 7931744 U**

(43) Veröffentlichungstag der Anmeldung:
**20.05.81 Patentblatt 81/20**

(45) Bekanntmachung des Hinweises auf die Patenterteilung:
**23.03.83 Patentblatt 83/12**

(84) Benannte Vertragsstaaten:
**AT BE CH DE FR GB IT LI LU NL SE**

(56) Entgegenhaltungen:
**DE-A-2 158 994**
**DE-A-2 301 533**
**DE-C-1 951 114**
**FR-A-1 233 242**
**FR-A-2 074 991**
**US-A-3 594 850**

(73) Patentinhaber: **König-Electronic Friedrich W. König, Steinstrasse 1-5, D-6101 Reichelsheim/Odw. (DE)**

(72) Erfinder: **Becella, Peter, Gerhard-Hauptmann-Ring 284, D-6000 Frankfurt/M.-50 (DE)**

(74) Vertreter: **Katscher, Helmut, Dipl.-Ing., Bismarckstrasse 20, D-6100 Darmstadt (DE)**

BUNDESDRUCKEREI BERLIN

# Reinigungskassette für Kassettenrecorder

Die Erfindung bezieht sich auf eine Reinigungskassette für Kassettenrecorder mit einem in einem Kassettengehäuse umlaufenden Reinigungsband zum Reinigen des Tonkopfs, der Antriebsrollen und anderer Teile des Kassettenrecorders.

Beim Abspielen von Kassetten in Kassettenrecordern verschmutzen und verharzen nach und nach der Löschkopf, der Aufnahme- und Wiedergabekopf und die Antriebsrollen. Die Folge ist eine schlechtere Aufnahme- und Wiedergabequalität. Oft kommt es infolge der verschmierten und verharzten Teile, die mit dem Band in Berührung kommen, zu einer Verwirrung des Bands, dem sogenannten Bandsalat.

Reinigungskassetten für Kassettenrecorder sind in unterschiedlicher Ausführungsform bekannt. Meist weisen diese Reinigungskassetten ein spezielles Reinigungsband auf, das so beschaffen ist, daß es den Schmutz von den zu reinigenden Teilen des Kassettenrecorders aufnehmen soll. Bei diesen bekannten Reinigungskassetten dauert der Reinigungsvorgang aber verhältnismäßig lange und ist oft ungenügend.

Hier schafft die Erfindung Abhilfe. Die im Anspruch 1 gekennzeichnete Erfindung löst die Aufgabe, eine Reinigungskassette für Kassettenrecorder nach dem Oberbegriff des Patentanspruchs 1 zu schaffen, bei der der Reinigungsvorgang verbessert und beschleunigt wird.

Diese Aufgabe wird danach erfindungsgemäß dadurch gelöst, daß im Kassettengehäuse in der Bahn des Reinigungsbands ein saugfähiger Körper, insbesondere ein Wattebausch, Kunststoffbausch oder Filzkörper angeordnet ist, an dem die Reinigungsfläche des Reinigungsbands mittels eines zusätzlichen Bandumlenkelements gleitend entlangbewegt wird, und daß das Kassettengehäuse über dem saugfähigen Körper eine Einfüllöffnung zum Befeuchten des saugfähigen Körpers mit Reinigungsflüssigkeit aufweist.

Das über den saugfähigen Körper hinweggleitende Reinigungsband nimmt die Reinigungsflüssigkeit, insbesondere sogenannten Tonkopfreiniger, auf und reinigt die mit dem Band in Berührung tretenden, verschmutzten Teile, wie Tonkopf, Antriebsrollen usw. Die Verschmutzung wird rasch und gründlich beseitigt, so daß die Aufnahme- und Wiedergabequalität des Kassettenrecorders wieder auf den ursprünglichen Stand gebracht wird.

In Weiterbildung des Erfindungsgedankens ist vorgesehen, daß auf der gegenüberliegenden Seite des Kassettengehäuses in gleicher Anordnung ebenfalls ein saugfähiger Körper, ein zusätzliches Bandumlenkelement und eine Einfüllöffnung vorgesehen sind. Bei dieser doppelten Anordnung kann der Reinigungsvorgang noch wesentlich beschleunigt werden.

Eine Reinigungskassette nach dem Oberbegriff des Patentanspruchs 1 ist aus der Fig. 3 der DE-A-2 158 994 bekannt. Das Reinigungsband weist selbst eine Zwischenlage aus absorbierendem Schaumstoff und eine äußere Lage aus Filz auf. Die Reinigungsflüssigkeit ist in einem Hohlraum aufgenommen, der mit seinen Auslässen eine Abgabevorrichtung für die Reinigungsflüssigkeit bildet. Eine gleichmäßige, dosierte Abgabe der Reinigungsflüssigkeit ist nicht sichergestellt, da die Reinigungsflüssigkeit durch die Auslässe 39 aus dem Hohlräum 38 herausfließen muß. Der beim Reinigungsvorgang aufgenommene Schmutz muß vom Reinigungsband selbst aufgenommen werden.

Eine weitere Reinigungskassette ist aus der FR-A-2 074 991 bekannt. Das Reinigungsband (Fig. 3) wird gleitend an Schaumstoffkörpern entlanggeführt, die aber nicht zur Zufuhr von Reinigungsflüssigkeit, sondern nur dazu dienen, das Band unter Spannung zu halten. Eine Abgabevorrichtung für Reinigungsflüssigkeit ist nicht vorgesehen.

Die Erfindung wird nachfolgend anhand einer Zeichnung näher erläutert, die nur ein Ausführungsbeispiel darstellt. Es zeigt

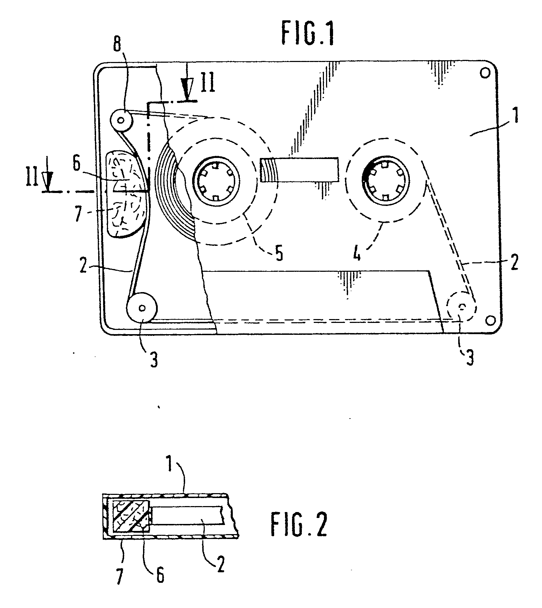

Fig. 1 eine Draufsicht auf eine teilweise aufgebrochen dargestellte Reinigungskassette und

Fig. 2 einen Teilschnitt längs der Linie II-II in Fig. 1.

In einem Kassettengehäuse 1 ist ein normales Reinigungsband 2 angeordnet, das über Umlenkrollen 3 oder andere Umlenkelemente und Bandspulen 4, 5 läuft. Beim dargestellten Ausführungsbeispiel ist an einem Ende des Kassettengehäuses 1 im Inneren ein Wattebausch, Kunststoffbausch, Filzkörper oder anderer saugfähiger Körper 6 angeordnet. Über dem saugfähigen Körper 6 ist im Oberteil des Kassettengehäuses 1 eine Einfüllöffnung 7 vorgesehen, durch die der saugfähige Körper 6 mit Tonkopf-Reinigungsflüssigkeit befeuchtet werden kann.

Ein zusätzliches Bandumlenkelement 8, beispielsweise eine Rolle oder ein Umlenkpfosten, sorgt im Kassettengehäuse 1 dafür, daß das Reinigungsband 2 an der ganzen Gleitfläche des saugfähigen Körpers 6 beim Reinigungsvorgang entlanggleitet.

In gleicher Anordnung können auf der entgegengesetzten Seite des Kassettengehäuses 1 ebenfalls ein saugfähiger Körper 6, ein zusätzliches Bandumlenkelement 8 und eine Einfüllöffnung 7 vorgesehen sein. Durch diese Anordnung wird der Reinigungsvorgang noch beschleunigt.

Die Reinigungskassette wird anstelle einer herkömmlichen Bandkassette in den Kassettenrecorder eingelegt und der Bandlauf eingeschaltet.

## Patentansprüche

1. Reinigungskassette für Kassettenrecorder, mit einem in einem Kassettengehäuse (1) umlaufenden Reinigungsband (2) zum Reinigen des Tonkopfs, der Antriebsrollen und anderer Teile des Kassettenrecorders, und mit einer Abgabevorrichtung, die Reinigungsflüssigkeit an das gleitend daran entlangbewegte Reinigungsband (2) abgibt, dadurch gekennzeichnet, daß die Abgabevorrichtung für die Reinigungsflüssigkeit ein saugfähiger Körper (6), insbesondere ein Wattebausch, Kunststoffbausch oder Filzkörper ist, an dem die Reinigungsfläche des Reinigungsbands (2) mittels eines zusätzlichen Bandumlenkelements (8) entlangbewegt wird, und daß das Kassettengehäuse (1) über dem saugfähigen Körper (6) eine Einfüllöffnung zum Befeuchten des saugfähigen Körpers (6) mit Reinigungsflüssigkeit aufweist.

2. Reinigungskassette nach Patentanspruch 1, dadurch gekennzeichnet, daß auf der gegenüberliegenden Seite des Kassettengehäuses (1) in gleicher Anordnung ebenfalls ein saugfähiger Körper (6), ein zusätzliches Bandumlenkelement (8) und eine Einfüllöffnung (7) vorgesehen sind.

## Claims

1. Cleaning cassette for a cassette recorder, having a cleaning tape (2) running around in a cassette housing (1) for cleaning the tone-head, the drive rollers and other parts of the cassette recorder, and having a dispensing device which dispenses cleaning fluid to the cleaning tape (2) moved so as to slide along the dispensing device, characterised in that the dispensing device for the cleaning fluid is an absorbent body (6), in particular a pad of wadding, a synthetic material pad or felt body, along which the cleaning surface of the cleaning tape (2) is moved by way of an additional tape-guiding element (8), and that the cassette housing (1) has over the absorbent body (6) a filler hole for moistening the absorbent body (6) with cleaning fluid.

2. Cleaning cassette according to claim 1, characterised in that on the opposite side of the cassette housing (1), in the same arrangement, are likewise provided an absorbent body (6), an additional tape-guiding element (8) and a filler hole (7).

## Revendications

1. Cassette de nettoyage pour enregistreur à cassettes comportant une bande de nettoyage (2) destinée au nettoyage de la tête magnétique, des rouleaux d'entraînement et d'autres parties de l'enregistreur à cassettes, bande circulant dans un boîtier de cassette (1) et un dispositif de distribution qui distribue de liquide de nettoyage à la bande de nettoyage (2) qui glisse le long de celui-ci, caractérisée en ce que le dispositif de distribution du liquide de nettoyage consiste en un corps absorbant (6), notamment un tampon d'ouate, un tampon synthétique ou un feutre, le long duquel la surface de nettoyage de la bande de nettoyage (2) est déplacée au moyen d'un élément de guidage (8) supplémentaire, et en ce que le boîtier de la cassette (1) présente, au-dessus du corps absorbant (6), une ouverture de remplissage destinée à humidifier le corps absorbant (6) avec le liquide de nettoyage.

2. Cassette de nettoyage suivant la revendication 1, caractérisée en ce qu'un corps absorbant (6), un élément de guidage (8) supplémentaire de la bande et une ouverture de remplissage (7) sont prévus aux côtés opposés du boîtier de la cassette (1) suivant une disposition analogue.

## FIG.1

## FIG.2